# EUROPEAN PATENT SPECIFICATION

(11) **EP 1 075 600 B1**
(45) Date of publication and mention of the grant of the patent: **07.08.2002**
(21) Application number: 99913121.2
(22) Date of filing: 16.04.1999
(51) Int. Cl.: F03D 7/00, F03D 11/00

(54) **WIND TURBINE WITH STRESS INDICATOR**
WINDTURBINE MIT BEANSPRUCHUNGSINDIKATOR
EOLIENNE AVEC INDICATEUR DE CONTRAINTES

(30) Priority: 30.04.1998 DK 58998
(43) Date of publication of application: 14.02.2001
(73) Proprietor: LM GLASFIBER A/S, 6640 Lunderskov (DK)
(72) Inventor: GRABAU, Peter, DK-6000 Kolding (DK)
(74) Representative: Thierry-Carstensen, Ole Jean
(86) International application number: DK9900211
(87) International publication number: WO9957435

(56) References cited:
- JP-A- 7 054 762
- US-A- 4 143 552
- US-A- 4 524 620

## Description

The invention relates to a wind turbine having a number of blades, a transducer being provided on at least one of the blades. The invention further relates to a method of measuring vibrations in a wind turbine blade.

WO 83/01490 discloses a wind turbine on which stress sensors are provided in various positions. As an example an indicator for registering vibrations is provided in the tower, as too large vibrations may damage the wind turbine. A draw-back of such an indicator is that it does not render a sufficiently detailed information of the state of the wind turbine.

The object of the invention is thus to show how more detailed information about the state of the wind turbine is obtained.

A wind turbine of the above type is according to the invention characterised in that the transducer at each blade is tri-axial and preferably formed of a tri-axial accelerometer, said transducer being provided for indicating the stresses to which the blade has been subjected. As a result a detailed picture is given of both edge-wise and flap-wise vibrations of the blade such that the state of the blade is determined more accurately. Furthermore by means of a calculator unit the edge-wise and the flap-wise natural frequency of the blade can be estimated. If one of these frequencies changes considerably or abruptly, this indicates that the blade has been damaged.

Furthermore according to the invention the signals rendered by the transducer are transmitted to a signal processing unit, in which they are compared to known references or known signal patterns for indicating possible deviations therefrom.

Furthermore according to the invention the signal processing unit may be adapted to transmit a warning signal in case the deviations from the known references or known signal patterns exceed a predetermined threshold.

The invention is explained in greater detail below with reference to the accompanying drawings, in which
Fig. 1 illustrates a wind turbine blade, the vibrations to which the blade is subjected being shown,

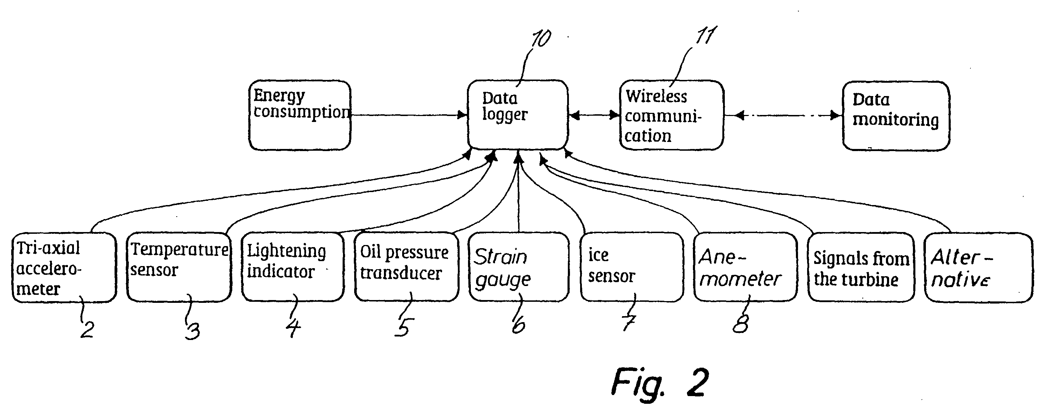

Fig. 2 is a diagram of a system for processing signals from an accelerometer in the blade,

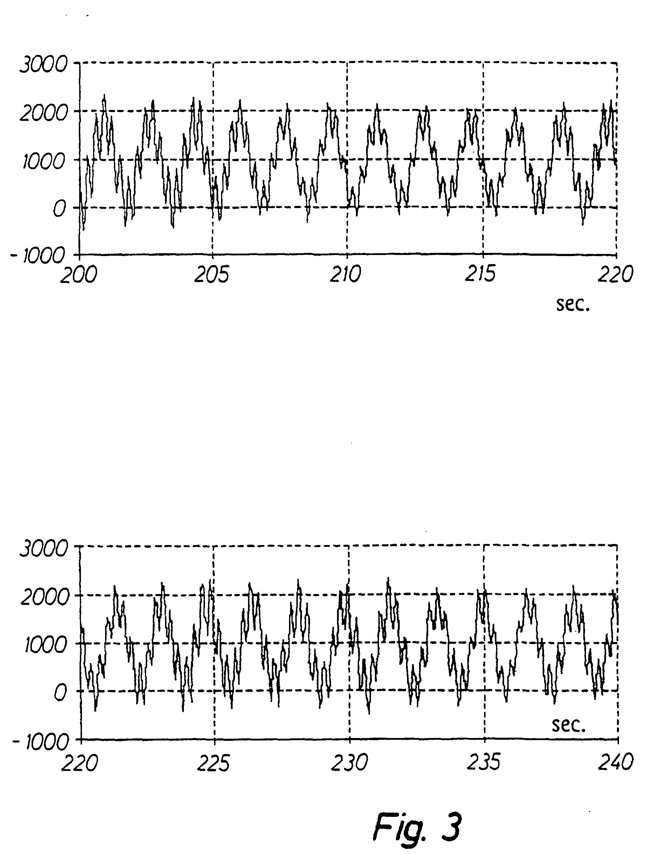

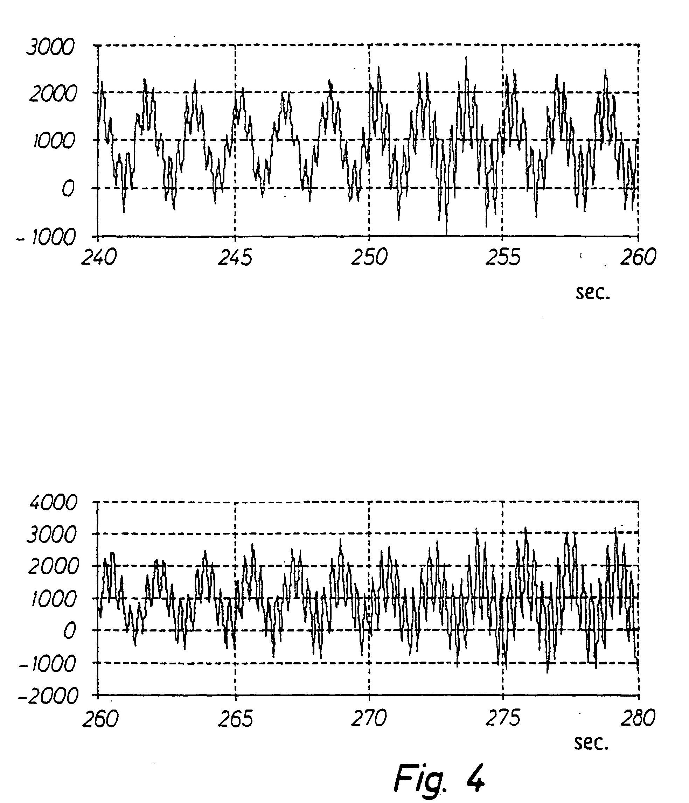

Figs. 3 and 4 illustrate minor edge-wise vibrations superposing the rotation of the rotor which is about one sixth of the edge-wise natural frequency of the blade,

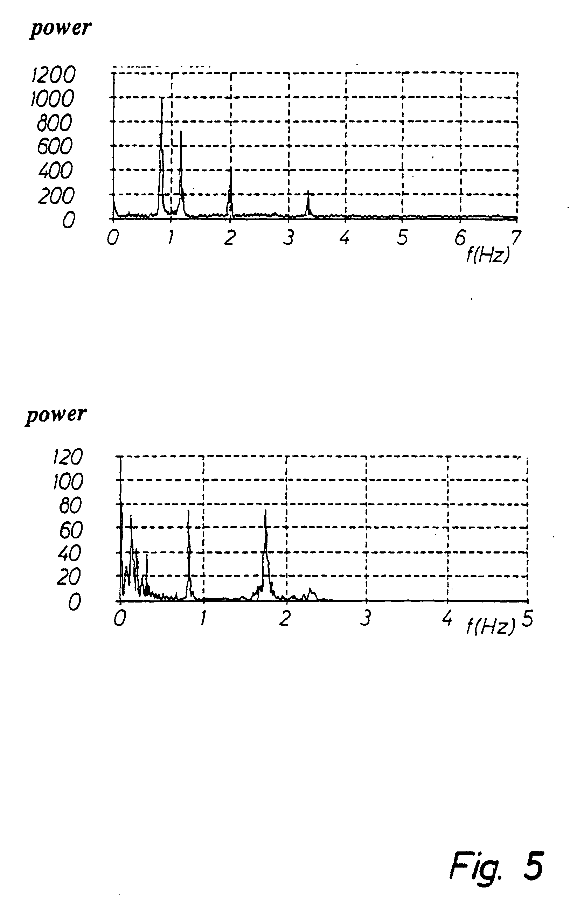

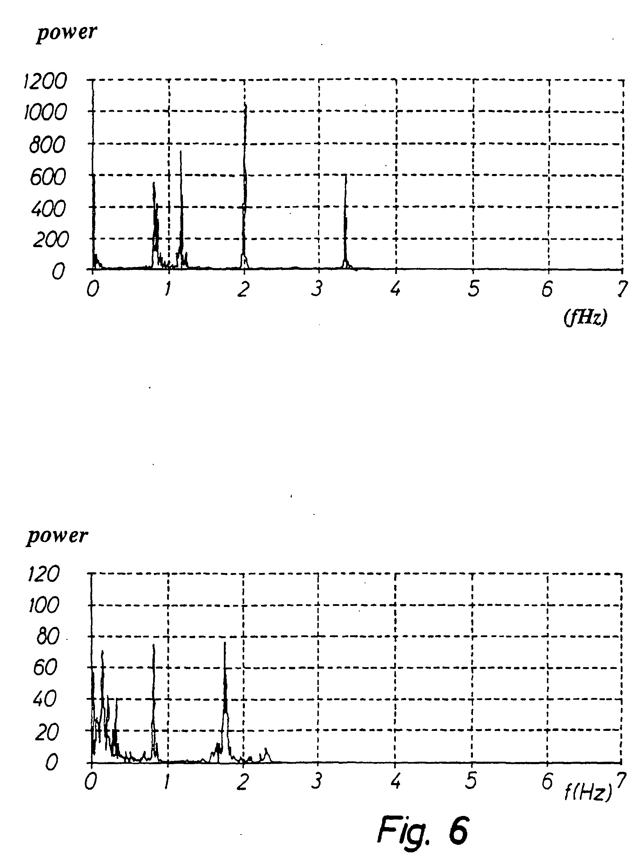

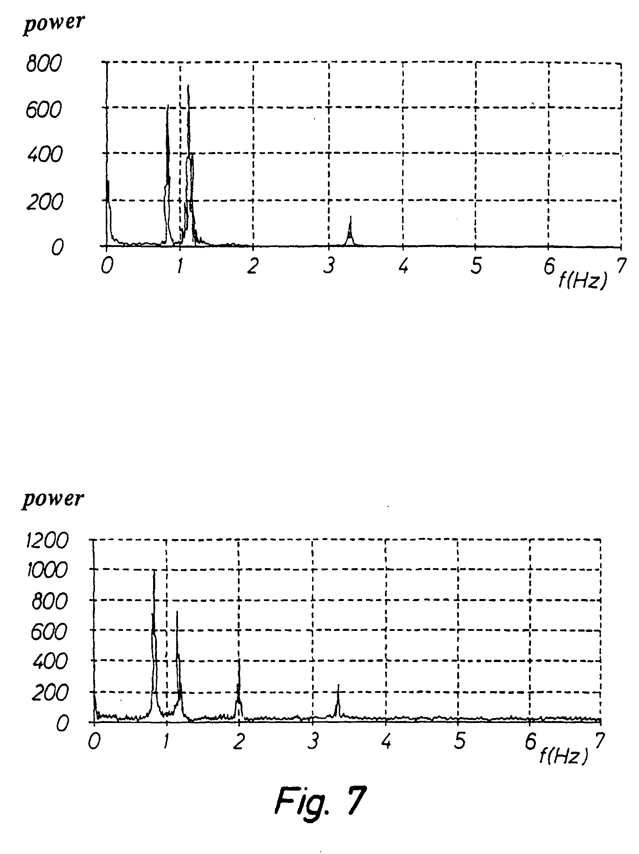

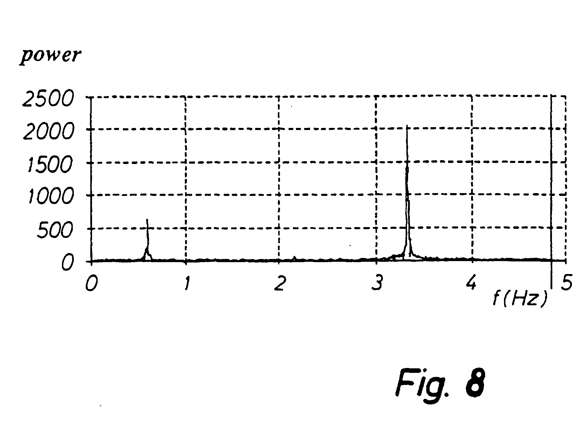

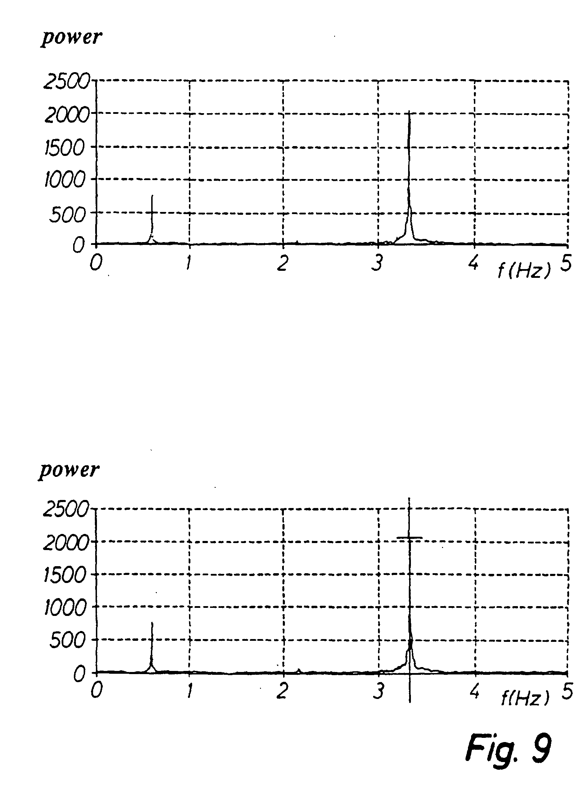

Figs. 5-9 show examples of frequency analyses indicating various natural frequencies including the natural frequency of the blades,

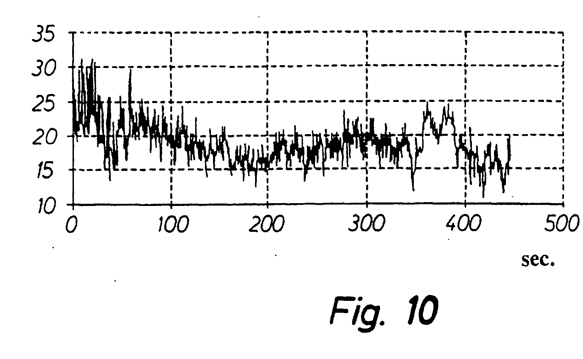

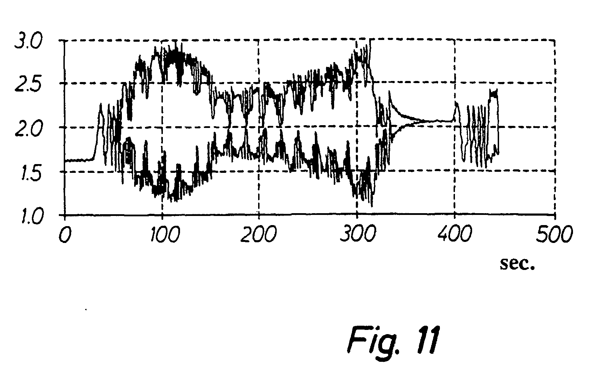

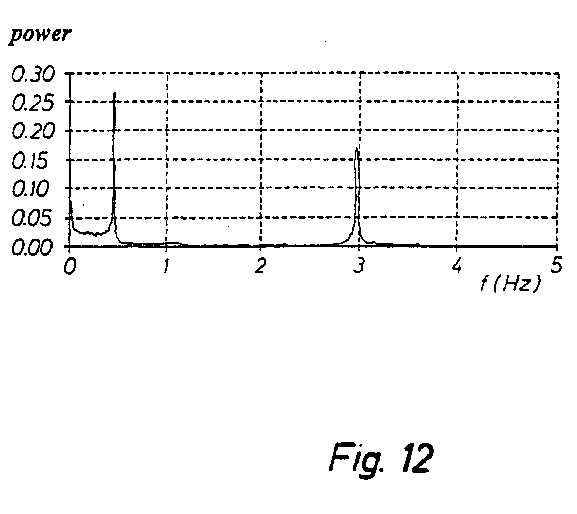

Figs. 10-12 show an example of connected values of wind speed, transducer signal and Fourier-transformed transducer signal.

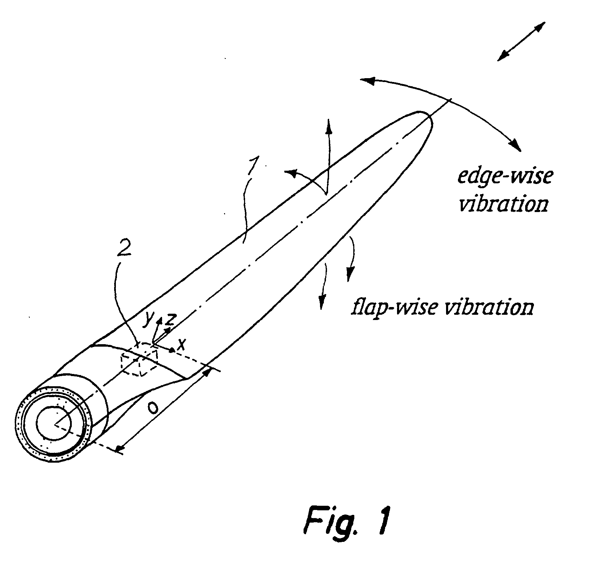

Each wind turbine blade 1 may be subjected to both edge-wise and flap-wise vibrations, confer Fig. 1. A black box is provided in each blade 1 for detecting said vibrations and for detecting and registering various stresses in the blade. These stresses are measured by means of sensors in form of transducers. The measured signals from the transducers 2 may be processed directly in the black box. Based on the processed and registered signals, it may subsequently be established whether the wind turbine blade 1 has been detrimentally overloaded.

The black box comprises
- an independent power supply operating in a rotating system,
- a number of dedicated sensors in form of accelerometers for indicating the stresses to which the blade is subjected,
- a data logger, in which the signals from the accelerometers are processed according to dedicated principles and stored, and
- a radio transmitter for transmitting key parameters from the signal processing to a receiver.

The black box is mounted such in the blade to allow maintenance and furthermore adapted to allow the sensor to operate in the optimum manner.

The power supply to the black box consists of a charger and a battery. The charger may be formed in several different manners and may utilise for instance the rotation of the blade as a source of energy. Optionally solar panels mounted on the surface of the blade or air currents around the blade may be used by means of a small turbine, or electrical power may be transmitted from the generator operated by the wind turbine.

The data logger in the black box comprises a data collection unit with analogue and digital inputs/outputs, a signal conditioning unit with an anti-aliasing filter and a data processing unit. The data processing unit sorts the collected data pursuant to predetermined criteria such as set limit values. The data are stored in the data logger such that the temporal course subsequently may be evaluated. At a breakdown of the wind turbine, the data logger discontinues all logging to avoid deletion of the data which possibly may indicate the reason for the breakdown.

The data logger furthermore has a communication port communicating with a wireless transmitting/receiving equipment such as a GSM telephone with data communications speed. Following predetermined regulations, the transmitter may be activated to transmit a message to a predetermined receiver, eg a predetermined telephone number. Moreover the transmitting/receiving equipment enables remote data switching exchange for reprogramming of the data collection unit.

The receiver may communicate with a controller of the wind turbine, whereby the controller receives information about any overloads of the individual blade and may act thereon. The receiver may optionally communicate with a central monitoring unit or a service team which can be called out, if necessary.

### Tri-axial accelerometer.

By measuring the accelerations in the edge-wise direction of the blade 1, edge-wise vibrations, a too sudden application of the brakes and short circuits in the generator may be indicated. Due to the rotation of the blade, an acceleration signal of ± 1 g varying with the frequency of rotation is always present. The acceleration signal may be used either to calibrate the measurements and continuously automatically adjust the zero or to calibrate the collected measuring data. The data processing unit calculates the edge--wise natural frequency of the blade and checks that said frequency does not change drastically within a short time. A rapid change in the natural frequency indicates an overload and a possible fracture of a blade. Furthermore an unbalance in the rotor for instance due to ice formation may be registered for activation of a de-icing system.

The accelerations are also measured in the flap-wise direction of the blade. An overload in the flap-wise direction of the blade indicates that the maximum power has been exceeded or during standstill of the turbine that the wind speed has exceeded the threshold for operation. It is also possible to calibrate signals for measuring accelerations in the flap-wise direction provided the accelerometer is arranged so as to be influenced by a component of gravity corresponding to a slightly oblique arrangement of the accelerometer. Also in the flap-wise direction the data processing unit is able to continuously calculate the flap-wise natural frequency.

Moreover the accelerations are measured in the longitudinal direction of the blade 1 so as to indicate when the maximum allowable rpm has been exceeded by the rotor. This measurement may also be calibrated based on the periodical influence of the gravity.

The accelerometers may advantageously be arranged in the black boxes.

A lightning indicator may reduce the damage due to lightning by rapid service and inspection. Such an indicator may also be used to settle a dispute between the owner of the wind turbine and the insurance company insuring the wind turbine.

Furthermore the temperature may be indicated during operation.

Moreover oil pressure transducers may indicate how the tip brake system has been used and thus reveal any overload of said brake system.

By arranging a strain gauge in the base of the turbine, the loads to which the blade has been subjected during operation and during standstill are also indicated. The natural frequencies and amplitudes of the blade may also be read.

Furthermore an anemometer may be provided for indicating the wind speed in the measuring period in question.

The said black box comprising the three axis accelerometer may for instance be a G-LOGGER(tm) ACCELERATION ACQUISITION SYSTEM, Model 3310 from Silicon Designs, Inc., 1445-NW Mall Street, Issaquah, WA 98027-5344, USA.

This black box is battery powered and can acquire data with a frequency range of 0 to 500 Hz. It comprises three orthogonally mounted model 1010J digital capacitive accelerometers along with microcomputer-based data logging electronics inside an aluminium case. The black box automatically logs AC/DC accelerations or AC velocities into its flash memory. Peak accelerations or velocity samples for each axis can also be recorded over user-selected time intervals. Multiple windows of contiguous acceleration samples can also be recorded, centre triggered, by acceleration peaks events. For AC acceleration or velocity, a root means squared (RMS) algorithm can be applied to the data stream. The overall size of the black box is 3.5"x 4.5"x 2.2" (8,89 cm x 11,43 cm x 5,58 cm) and the weight of the black box is about 28.5 oz (0,8 kg).

The black box model No 3310 is easily programmed via a menu-based program running under Windows 95 on a personal computer. Missions are downloaded to the black box model No 3310 via a RS-232 serial cable connected to the serial port of the PC. Once programmed, the black box model No 3310 can be disconnected from the RS-232 serial cable and moved to the data collection site. An AC power adaptor is included to power the black box model No 3310 during mission programming and data downloading. Missions can be programmed with either immediate, absolute time/date or delayed starting points with sequentially programmable data types and independent time durations. The total data acquisition time depends on the acquisition rates selected and varies from 300 seconds to two weeks. The data sample rate ranges from one per second to 4000 per second. The black box may optionally be mounted to the object by means of screws.

According to a particularly advantageous embodiment, two accelerometers are used, each with two axes.

By measuring the acceleration in the edge-wise direction of the blade 1. edge-wise vibrations, a too sudden application of the brakes and short circuits in the generator may be indicated. Due to the rotation of the blade, an acceleration signal of ± 1g varying with the frequency of rotation is always present. This acceleration signal may be used to calibrate the measurement and continuously automatically adjust the zero or to calibrate the collected measuring data. The data processing unit is able to calculate the edge-wise natural frequency of the blade and to check that said frequency does not change drastically within a short time. Such a drastic change in the natural . frequency may in fact indicate a fracture or an overload of the blade.

The acceleration is also measured in the flap-wise direction of the blade 1. An overload in the flap-wise direction indicates that the threshold for maximum power has been exceeded or if the turbine is in standstill the survival wind speed. It is also possible to calibrate in the flap-wise direction provided the accelerometer is arranged such that a component of the gravity influences the accelerometer. This corresponds to an oblique arrangement of the accelerometer. Two axes are used for measuring this signal. Also in the flap-wise direction the data processing unit is able to continuously calculate the flap-wise natural frequency.

The acceleration is also measurable in the longitudinal direction of the blade to indicate whether the rotor has exceeded the maximum allowed rpm. This rpm value may be calibrated based on gravity.

The black box is typically mounted on one of the beams joining the plates. The positioning may vary according to the size of the blade 1. The optimum position on a blade of the LM 19.1 type is five to eight metres from the flange of the blade.

## Claims

1. Wind turbine having a number of blades, a transducer being provided on at least one of the blades, **characterised in that** said transducer is a tri-axial sensor and preferably formed of a tri-axial accelerometer, said transducer being provided for indicating the stresses to which the blade has been subjected.

2. Wind turbine according to claim 1, **characterised in that** the signals rendered by the transducer are transmitted to a signal processing unit, in which they are compared to known references or known signal patterns for indicating possible deviations therefrom.

3. Wind turbine according to claim 2, **characterised in that** the signal processing unit is adapted to transmit a warning signal in case the deviations from the known references or known signal patterns exceed a predetermined threshold.

4. Wind turbine according to claims 1-3, **characterised in that** the transducer is arranged adjacent or in one end of the blade.

5. Wind turbine according to claims 1-4, **characterised in that** the signal processing unit is arranged centrally and communicates with each transducer optionally via wireless transmissions.

6. Wind turbine according to any one of the preceding claims, **characterised in that** the tri-axial sensor is formed of two bi-axial accelerometers.

7. Method of measuring vibrations in a wind turbine blade, **characterised in that** the measuring values are obtained from a tri-axial sensor provided on the blade for indicating the stresses to which the blade has been subjected.

## Patentansprüche

1. Windturbine, die eine Anzahl von Flügeln hat, wobei ein Wandler an mindestens einem der Flügel vorgesehen ist, **dadurch gekennzeichnet, daß** der Wandler ein Triaxialsensor ist und bevorzugt aus einem Triaxialbeschleunigungsmesser besteht, wobei der Wandler vorgesehen ist, um die Beanspruchungen, denen der Flügel ausgesetzt ist, anzuzeigen.

2. Windturbine nach Anspruch 1, **dadurch gekennzeichnet, daß** die von dem Wandler gelieferten Signale zu einer Signalverarbeitungseinheit übertragen werden, in der sie mit bekannten Standards oder bekannten Signalmustern verglichen werden, um mögliche Abweichungen davon anzuzeigen.

3. Windturbine nach Anspruch 2, **dadurch gekennzeichnet, daß** die Signalverarbeitungseinheit so ausgebildet ist, daß sie dann, wenn die Abweichungen von den bekannten Standards oder bekannten Signalmustern einen vorbestimmten Schwellenwert überschreiten, ein Warnsignal überträgt.

4. Windturbine nach den Ansprüchen 1 bis 3, **dadurch gekennzeichnet, daß** der Wandler einem Ende des Flügels benachbart oder in einem Ende des Flügels angeordnet ist.

5. Windturbine nach den Ansprüchen 1 bis 4, **dadurch gekennzeichnet, daß** die Signalverarbeitungseinheit zentral angeordnet ist und mit jedem Wandler fakultativ über drahtlose Übermittlungen in Verbindung steht.

6. Windturbine nach einem der vorhergehenden Ansprüche, **dadurch gekennzeichnet, daß** der Triaxialsensor aus zwei Biaxialbeschleunigungsmessern besteht.

7. Verfahren zum Messen von Vibrationen in einem Windturbinenflügel, **dadurch gekennzeichnet, daß** die Meßwerte von einem Triaxialsensor erhalten werden, der an dem Flügel vorgesehen ist, um die Beanspruchungen, denen der Flügel ausgesetzt ist, anzuzeigen.

## Revendications

1. Eolienne comportant un certain nombre de pales, un transducteur étant disposé sur au moins l'une des pales, **caractérisée en ce que** ledit transducteur est un capteur triaxial et est de préférence formé d'un accéléromètre triaxial, ledit transducteur étant destiné à indiquer les contraintes, auxquelles la pale a été soumise.

2. Eolienne selon la revendication 1, **caractérisée en ce que** les signaux fournis par le transducteur sont transmis à une unité de traitement de signaux, dans laquelle ils sont comparés à des références connues ou à des profils de signaux connus pour l'indication d'écarts possibles par rapport à ces références ou profils.

3. Eolienne selon la revendication 2, **caractérisée en ce que** l'unité de traitement de signaux est adaptée pour transmettre un signal d'avertissement dans le cas où l'écart par rapport à des références connues ou à des profils de signaux connus dépasse un seuil prédéterminé.

4. Eolienne selon les revendications 1 à 3, **caractérisée en ce que** le transducteur est disposé au voisinage ou dans une extrémité de la pale.

5. Eolienne selon la revendication 1 à 4, **caractérisée en ce que** l'unité de traitement de signaux est disposée d'une manière centrale et communique avec chaque transducteur facultativement par l'intermédiaire de transmissions sans fil.

6. Eolienne selon l'une quelconque des revendications précédentes, **caractérisée en ce que** le capteur triaxial est formé de deux accéléromètres biaxiaux.

7. Procédé de mesure de vibrations dans une pale d'éolienne, **caractérisé en ce que** les valeurs de mesure sont obtenues à partir d'un capteur triaxial prévu sur la pale et servant à indiquer les contraintes auxquelles la pale a été soumise.
